# EUROPÄISCHE PATENTANMELDUNG

(11) **EP 4 000 799 A1**
(43) Veröffentlichungstag der Anmeldung: **25.05.2022**
(21) Anmeldenummer: 20405024.9
(22) Anmeldetag: 12.11.2020
(51) Int. Cl.: B23Q 3/157, B23Q 7/14, B23Q 37/00, B23Q 39/02, B23Q 41/02

(54) **MASCHINENKONZEPT ZUR MASSENHERSTELLUNG VON HOCHPRÄZISEN WERKSTÜCKEN**

(71) Anmelder: Imoberdorf Holding AG, 4702 Oensingen (CH)
(72) Erfinder: Barbetta, Attila, CH-3367 Thörigen (CH); Imoberdorf, Anton, CH-4532 Feldbrunnen (CH)
(74) Vertreter: Ullrich, Gerhard

(57) **Zusammenfassung**

Maschinenkonzept zur Massenherstellung von hochpräzisen Werkstücken (**8**) mit perspektivischer Steigerung der in einer definierten Zeiteinheit zu produzierenden Stückzahl an Werkstücken (**8**). Zur Herstellung einer ersten Zielgrösse der in der definierten Zeiteinheit zu produzierenden Stückzahl an Werkstücken (**8**) gemäss den an den Werkstücken (**8**) auszuführenden Bearbeitungsschritten wird zumindest ein Bearbeitungszentrum (**1**) mit den benötigten Bearbeitungseinheiten (**2**) ausgestattet, die auf einen gemeinsamen Bearbeitungsbereich (**13**) gerichtet sind. Zur Herstellung einer gegenüber der ersten Zielgrösse erhöhten zweiten Zielgrösse der in der definierten Zeiteinheit zu produzierenden Stückzahl an Werkstücken (**8**) wird dem zumindest einen Bearbeitungszentrum (**1**) zumindest ein weiteres Bearbeitungszentrum (**1**) unter Beibehaltung der validierten Produktionsbedingungen hinzugefügt. Haben sich Bedarf und damit die Zielgrösse der in der definierten Zeiteinheit zu produzierenden Stückzahl an Werkstücken (**8**) enorm erhöht, werden keine weiteren Bearbeitungszentren (**1**) im Maschinenkonzept vorgesehen, sondern die Werkstückfertigung wird auf eine Transfermaschine unter Beibehaltung der validierten Produktionsbedingungen umgestellt.

## Beschreibung

### Anwendungsgebiet der Erfindung

Die vorliegende Erfindung betrifft ein Maschinenkonzept zur Massenherstellung von hochpräzisen Werkstücken mit perspektivischer Steigerung der in einer definierten Zeiteinheit zu produzierenden Stückzahl an Werkstücken. Beispielhafte Werkstücke sind Getriebeteile für den Automobilbau oder Teile für die Medizintechnik, nämlich aus Industriezweigen mit hohen Garantiebedingungen für die erzeugten Teile.

### Stand der Technik

Die bisher üblichen Maschinenkonzepte zur Massenherstellung von hochpräzisen Werkstücken aus Rohlingen, durch z.B. Drehen, Schleifen, Bohren, Fräsen oder Gewindeschneiden, beruhen auf dem Einsatz von Standardmaschinen. Neben der Materialspezifikation für die Rohlinge werden die eingesetzten Maschinen und Werkzeuge sowie die Fertigungstechnologie als konstant einzuhaltende Rahmenbedingungen in einer sogenannten Validierung zwischen dem Produzenten der Werkstücke und dem Abnehmer fixiert. Diese Rahmenbedingungen gelten zumeist vertragsgemäss über einen längeren Zeitraum und auch bei Erhöhung der zu produzierenden und zu liefernden Stückzahlen. Bei Erhöhung der geforderten Stückzahl und bisheriger völliger Auslastung der vorhandenen Maschinen sowie Einhaltung der Validierung, verbleibt dem Auftragnehmer daher in der Konsequenz nur, die Anzahl der eingesetzten Maschinen entsprechend zu vergrössern. Damit multipliziert sich der maschinelle und energetische Aufwand sowie der Raumbedarf, wobei die eingesetzten Maschinen selten den anstehenden Bearbeitungen optimal entsprechen können, d.h. überdimensioniert sind oder vorzeitige Verschleisserscheinungen behoben werden müssen. Somit gelingt weder eine Reduktion der eingesetzten Ressourcen und Umweltbelastung noch eine Senkung der Stückkosten trotz Erhöhung der Produktionszahl.

### Aufgabe der Erfindung

Angesichts der aufgezeigten Nachteile bei den bisher praktizierten Maschinenkonzepten zur Massenherstellung von hochpräzisen Werkstücken, insbesondere mit wahrscheinlicher perspektivischer Steigerung der erforderlichen Stückzahlen, liegt der Erfindung die Aufgabe zugrunde, ein verbessertes Maschinenkonzept zu schaffen. Hierbei sind bereits bei einer anfänglichen Stückzahl an zu produzierenden Werkstücken optimaler Ressourceneinsatz zu erzielen und dabei die in einer Validierung fixierten Rahmenbedingungen für die Massenherstellung weiterhin auch bei Produktionssteigerungen zu gewährleisten. Schliesslich gilt es, mit dem verbesserten Maschinenkonzept eine Minimierung der bereitzustellenden materiellen und personellen Ressourcen und der verursachten Umweltbelastung sowie möglichst auch eine Verringerung der Stückkosten bei erhöhter, insbesondere vervielfachter, Produktionszahl zu erreichen.

### Übersicht über die Erfindung

Ein Maschinenkonzept zur Massenherstellung von hochpräzisen Werkstücken mit perspektivischer Steigerung der in einer definierten Zeiteinheit zu produzierenden Stückzahl an Werkstücken bildet den Gegenstand der vorliegenden Erfindung. Zur Herstellung einer ersten Zielgrösse der in der definierten Zeiteinheit zu produzierenden Stückzahl an Werkstücken gemäss den an den Werkstücken auszuführenden Bearbeitungsschritten wird zumindest ein Bearbeitungszentrum mit den benötigten Bearbeitungseinheiten ausgestattet, die auf einen gemeinsamen Bearbeitungsbereich gerichtet sind. Hierbei werden Spezifikation und Anordnung der eingesetzten Bearbeitungseinheiten sowie der technologische Bearbeitungsablauf hinsichtlich der Werkstückcharakteristik optimiert. Diese Produktionsbedingungen werden nach einem Audit als validiert fixiert. Zur Herstellung einer gegenüber der ersten Zielgrösse erhöhten zweiten Zielgrösse der in der definierten Zeiteinheit zu produzierenden Stückzahl an Werkstücken wird dem zumindest einen Bearbeitungszentrum zumindest ein weiteres Bearbeitungszentrum unter Beibehaltung der validierten Produktionsbedingungen hinzugefügt. Haben sich Bedarf und damit die Zielgrösse der in der definierten Zeiteinheit zu produzierenden Stückzahl an Werkstücken enorm erhöht, werden keine weiteren Bearbeitungszentren im Maschinenkonzept vorgesehen, sondern die Werkstückfertigung wird auf eine Transfermaschine unter Beibehaltung der validierten Produktionsbedingungen umgestellt. Zur Aufrechterhaltung der Validierung werden auf der Transfermaschine nur solche Bearbeitungseinheiten installiert, die zur Spezifikation der in den Bearbeitungszentren eingesetzten Bearbeitungseinheiten äquivalent sind.

Die nachfolgenden Merkmale beziehen sich auf spezielle Ausführungen der Erfindung: Die Durchführung aller an einem Werkstück auszuführenden Bearbeitungsschritte erfolgt im Bearbeitungsbereich eines zunächst einzigen Bearbeitungszentrums unter den validierten Produktionsbedingungen. Oder, unter Fortgeltung der validierten Produktionsbedingungen, wird zur Steigerung der Stückzahl herzustellender Werkstücke das Maschinenkonzept mit weiteren Bearbeitungszentren ausgebaut. Hierbei werden auf jedem einzelnen Bearbeitungszentrum alle am Werkstück vorgesehenen Bearbeitungsschritte durchgeführt, oder in einer gebildeten Produktionsstrasse sind das erste Bearbeitungszentrum zur Durchführung einer ersten Sequenz von Bearbeitungsschritten am Werkstück und die nächsten Bearbeitungszentren zur Durchführung von weiteren Sequenzen von Bearbeitungsschritten am Werkstück bestimmt.

Bei Bildung einer Produktionsstrasse mit mehreren Bearbeitungszentren wird eine reihen-, parallel- oder kombiniert-förmige Verkettung arrangiert. Dabei sind den einzelnen Bearbeitungszentren, jeweiligen Gruppen von Bearbeitungszentren oder der Gesamtheit aller Bearbeitungszentren:
- eine jeweilige bzw. eine gesamthaft genutzte Transporteinrichtung zugeordnet, die der Zufuhr von Werkstückrohlingen, dem Weitertransport von teil-bearbeiteten Werkstücken und Abfuhr der fertig-bearbeiteten Werkstücke dient; und
- ein jeweiliger bzw. ein gesamthaft genutzter Spänebereich zugeordnet, welcher der Aufbereitung und Abfuhr der anfallenden Materialspäne dient.

Denkbar ist auch eine gesamthaft nutzbare Steuerungsanlage.

Im Bearbeitungsbereich sind mehrere Bearbeitungseinheiten, vorzugsweise drei Bearbeitungseinheiten, vorgesehen, die zur simultanen Bearbeitung am gleichen Werkstück nutzbar sein können.

Das erste Bearbeitungszentrum weist einen Be- und Entladebereich zur Zuführung der Werkstückrohlinge in den Bearbeitungsbereich bzw. zur Abführung des teil- oder fertig-bearbeiteten Werkstücks auf. Und das zumindest eine nächste Bearbeitungszentrum weist einen Be- und Entladebereich zur Zuführung eines auf einem vorangehenden Bearbeitungszentrum teil-bearbeiteten Werkstücks in den Bearbeitungsbereich dieses nächsten Bearbeitungszentrums bzw. zur Abführung des teil- oder fertig-bearbeiteten Werkstücks auf.

Die einzelne Bearbeitungseinheit ruht auf einem jeweiligen Achssystem, welches die Bewegung des von der Bearbeitungseinheit geführten Werkzeugs im x-y-z-Koordinatensystem erlaubt. Bei Aktivierung der Bearbeitungsspindel dreht sich diese um die erste Rotationsachse, wodurch das von der Bearbeitungsspindel angetriebene Werkzeug in Drehung versetzt wird.

Der Be- und Entladebereich weist einen Schwenkblock mit einem um eine Schwenksachse drehbaren Schwenkkopf auf, der zur Halterung von in den Bearbeitungsbereich einzuführenden rohen oder teil-bearbeiteten Werkstücken bzw. aus dem Bearbeitungsbereich abzuführenden teil- oder fertig-bearbeiteten Werkstücken bestimmt ist. Der um die Schwenkachse drehbare Schwenkkopf besitzt zumindest zwei Spannfutter zur Halterung und zum Transport der Werkstücke. Hierbei ist eines der Spannfutter in einer ersten Drehstellung des Schwenkkopfes zur Be- bzw. Entladung der Werkstücke bestimmt, während das andere Spannfutter in der ersten Drehstellung die Werkstücke zur Bearbeitung positioniert und in der zweiten Drehstellung des Schwenkkopfes die Funktionen der beiden Spannfutter wechseln. Ausserdem erstreckt sich durch den Schwenkblock eine zweite Rotationsachse, um das jeweils momentan in Achsrichtung stehende Spannfutter mit dem darin eingespannten Werkstück bei Bedarf in Rotation zu versetzen, z.B. für eine Drehbearbeitung, oder in der Drehposition zu verstellen, um eine andere Seite des Werkstücks zu bearbeiten.

Innerhalb des Bearbeitungszentrums ist zumindest einer der Bearbeitungseinheiten eine Werkzeugwechseleinheit zugeordnet. Zumindest eine der Bearbeitungseinheiten ist spanabhebend ausgebildet, und eine andere Bearbeitungseinheit könnte zum Abgreifen eines Werkstücks aus einem Spannfutter vorgesehen sein.

Die im Maschinenkonzept bei sich erst perspektivisch entwickelter sehr hohen Zielgrösse an zu produzierenden Werkstücken vorzusehende Transfermaschine ist als Rundtaktmaschine ausgebildet, radial um deren zentrisch angeordnetes Drehgestell eine Vielzahl von Bearbeitungseinheiten installiert ist. Die an der Rundtaktmaschine installierten Bearbeitungseinheiten entsprechen den bisher bei den Bearbeitungszentren eingesetzten Bearbeitungseinheiten, so dass auch diesbezüglich die validierten Produktionsbedingungen weiterhin eingehalten werden.

### Kurzbeschreibunq der beigefügten Zeichnungen

Es zeigen:
- Figur 1A -: ein Bearbeitungszentrum aus dem erfindungsgemässen Maschinenkonzept, in perspektivischer Prinzipansicht;
- Figur 1B -: das Bearbeitungszentrum gemäss Figur 1A mit einem Freischnitt in der Schutzverkleidung zum Einblick auf den Bearbeitungs- und Werkzeugwechselbereich des Bearbeitungszentrums;

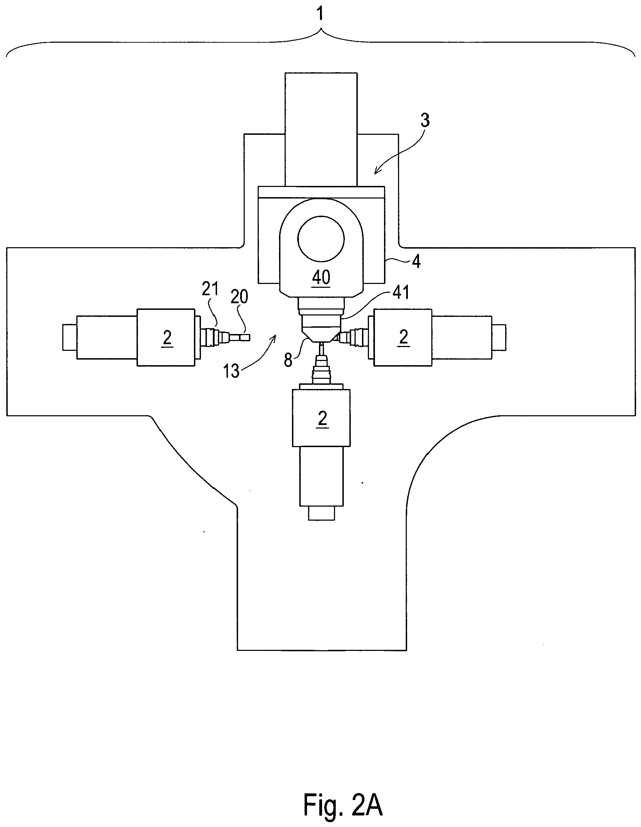

- Figur 2A -: das Bearbeitungszentrum gemäss Figur 1A mit dessen Be- und Entladebereich und Bearbeitungsbereich, bestehend aus drei Bearbeitungseinheiten, in schematischer Draufsicht;

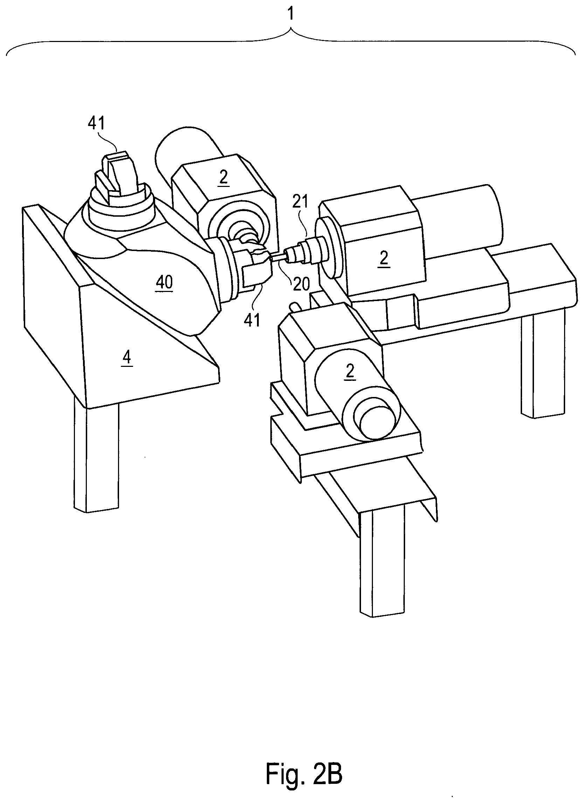

- Figur 2B -: den Aufbau gemäss Figur 2A, in Perspektivansicht;

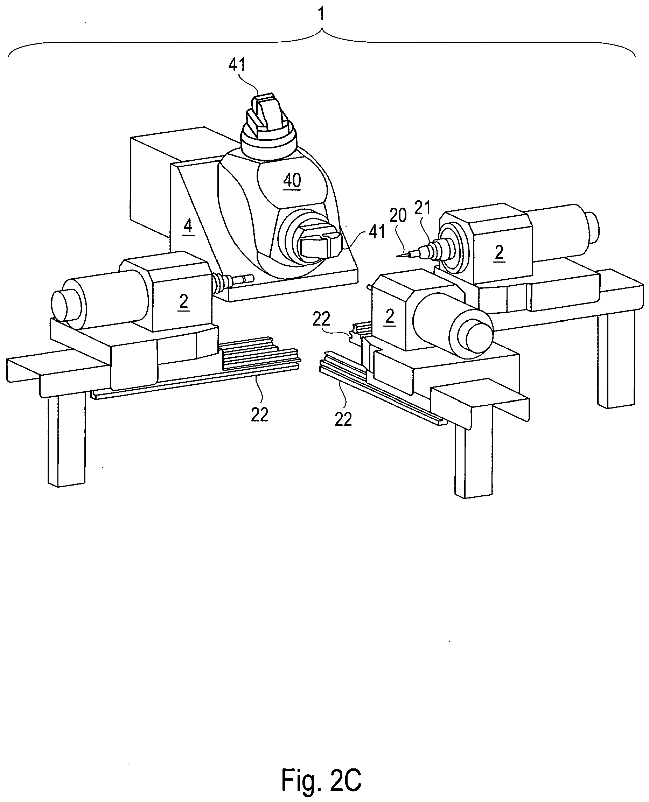

- Figur 2C -: den Aufbau gemäss Figur 2B, in gewechselter Perspektivansicht;

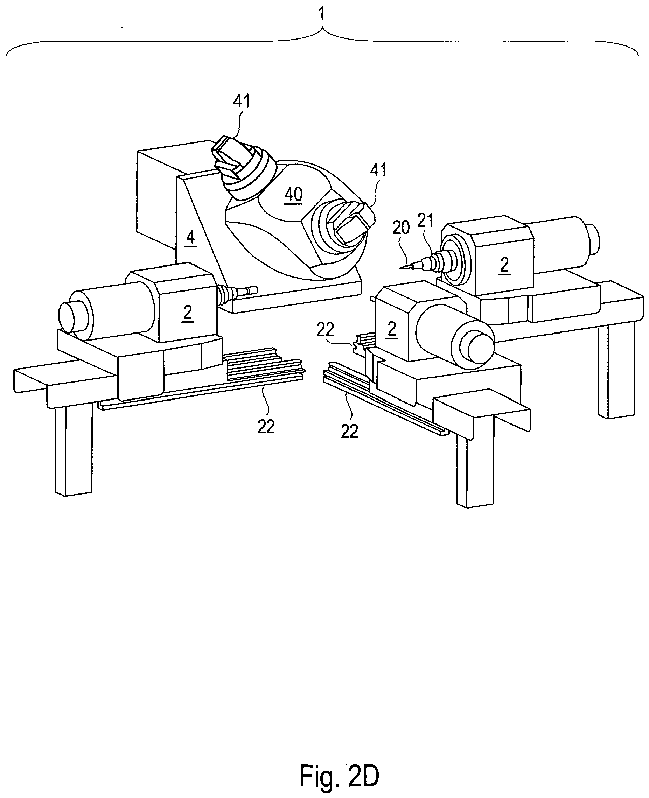

- Figur 2D -: den Aufbau gemäss Figur 2C, mit am Schwenkblock des Be- und Entladebereichs verstelltem Schwenkkopf;

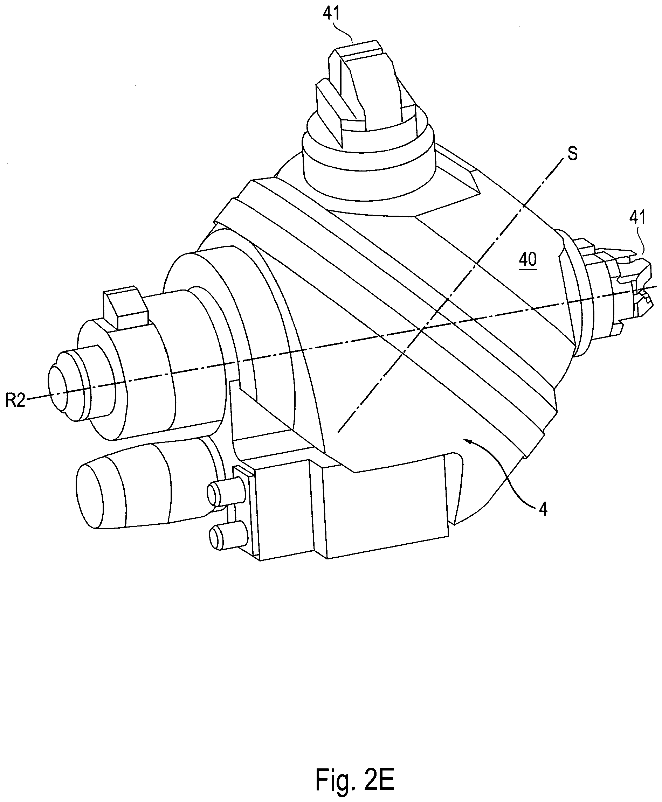

- Figur 2E -: den Schwenkblock aus Figur 2C, mit den am Schwenkkopf angeordneten zwei Spannfuttern, in perspektivischer Prinzipansicht;

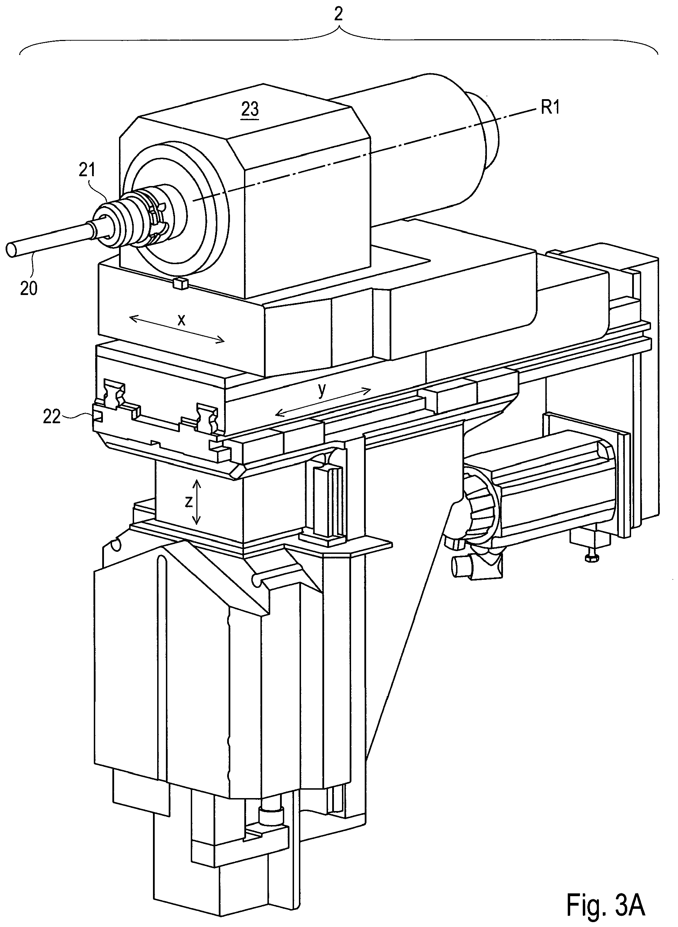

- Figur 3A -: eine Bearbeitungseinheit aus Figur 2A, mit x-y-z-Achssystem und horizontaler Bearbeitungsspindel, in perspektivischer Prinzipansicht;

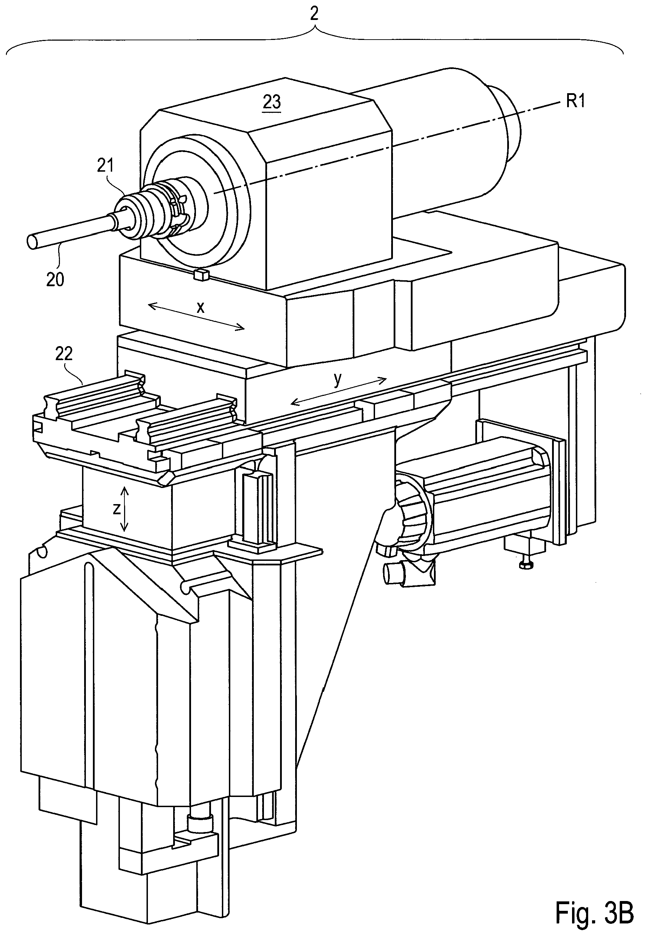

- Figur 3B -: die Bearbeitungseinheit gemäss Figur 3A, mit in y-Richtung verstellter Bearbeitungsspindel;

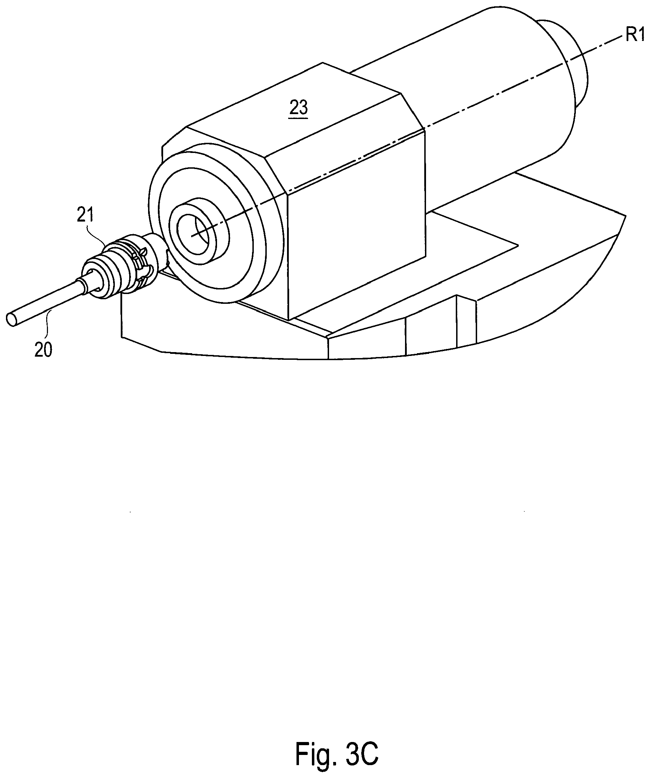

- Figur 3C -: den Werkzeughalter mit darin fixiertem Werkzeug von der Bearbeitungsspindel entfernt, in perspektivischer Prinzipansicht;
- Figuren 4A bis 4C:: Maschinenkonzepte mit erweiterter Ausstattung und mehreren Bearbeitungszentren;

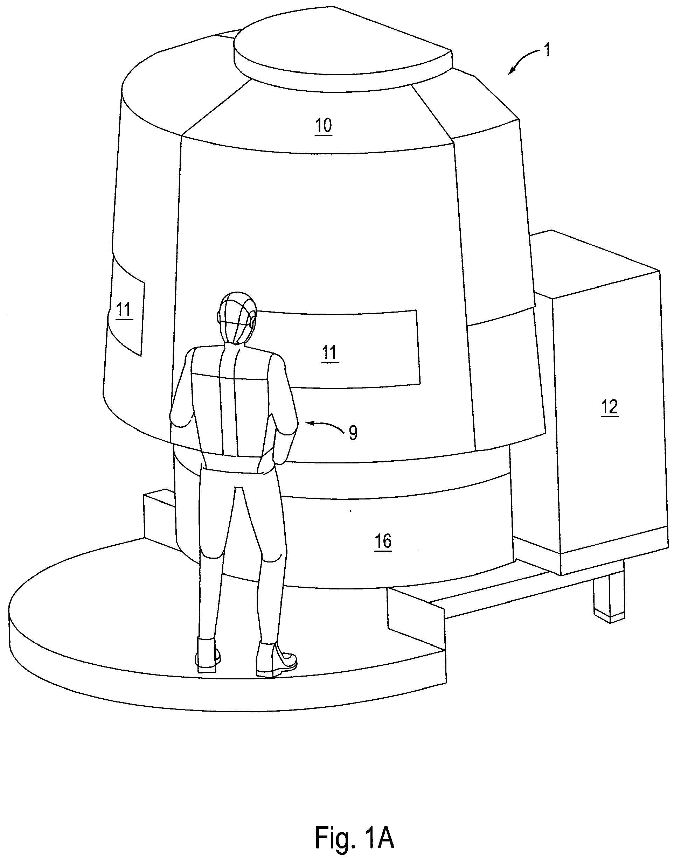

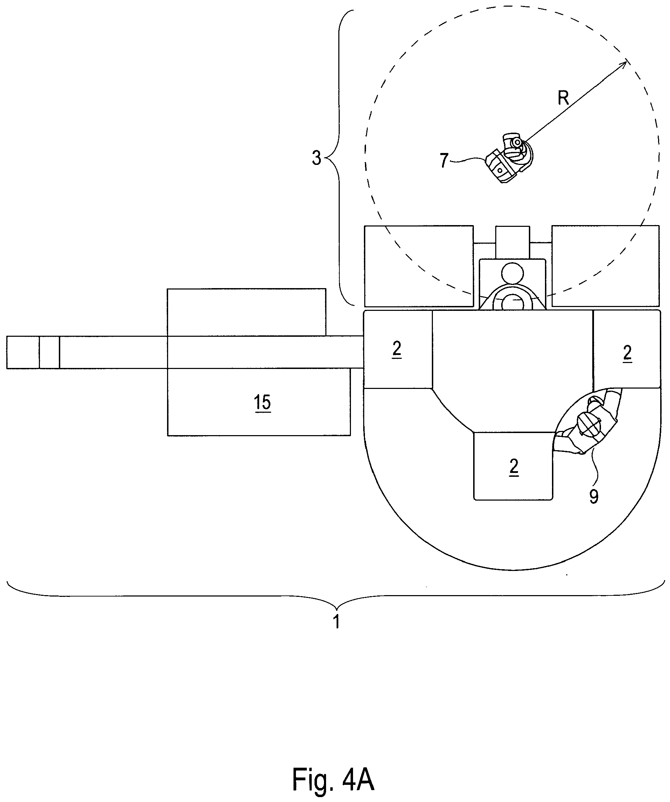

- Figur 4A -: ein Bearbeitungszentrum gemäss Figur 1A, mit zugeordnetem Spänebereich und Roboter sowie tätigem Bediener, in schematischer Draufsicht;

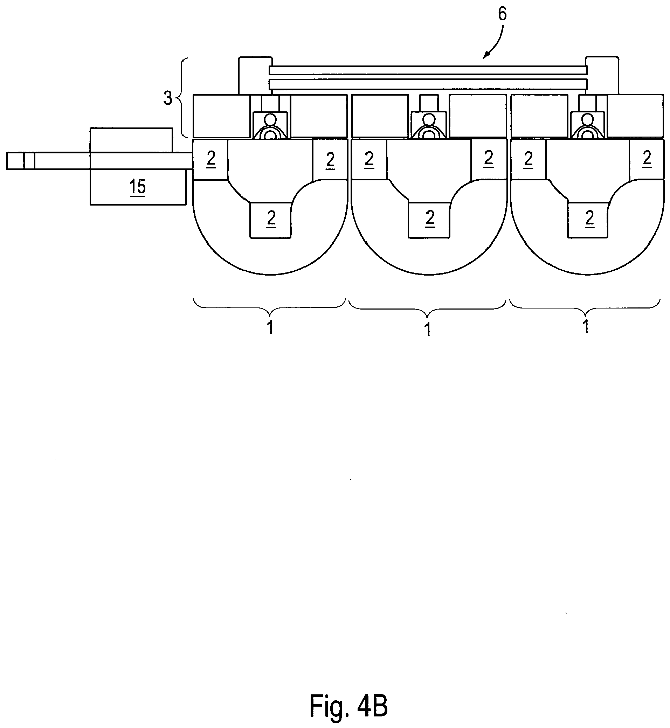

- Figur 4B -: drei miteinander verkettete Bearbeitungszentren, mit gemeinsamem Spänebereich und Transporteinrichtung, in schematischer Draufsicht;

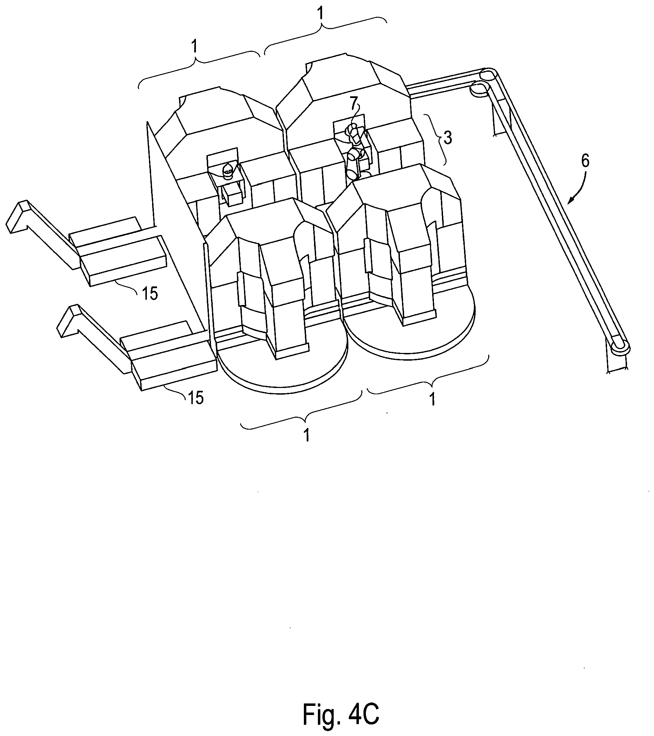

- Figur 4C -: vier miteinander verkettete Bearbeitungszentren, mit paarweise jeweils zugeordnetem Spänebereich sowie gemeinsamer Transport-einrichtung und einem Roboter, in schematischer Draufsicht; und

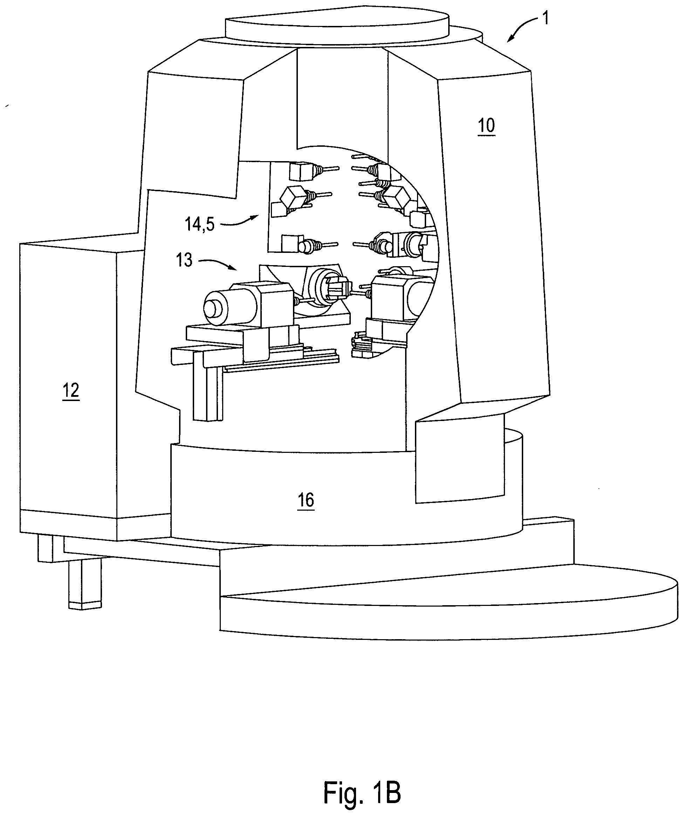

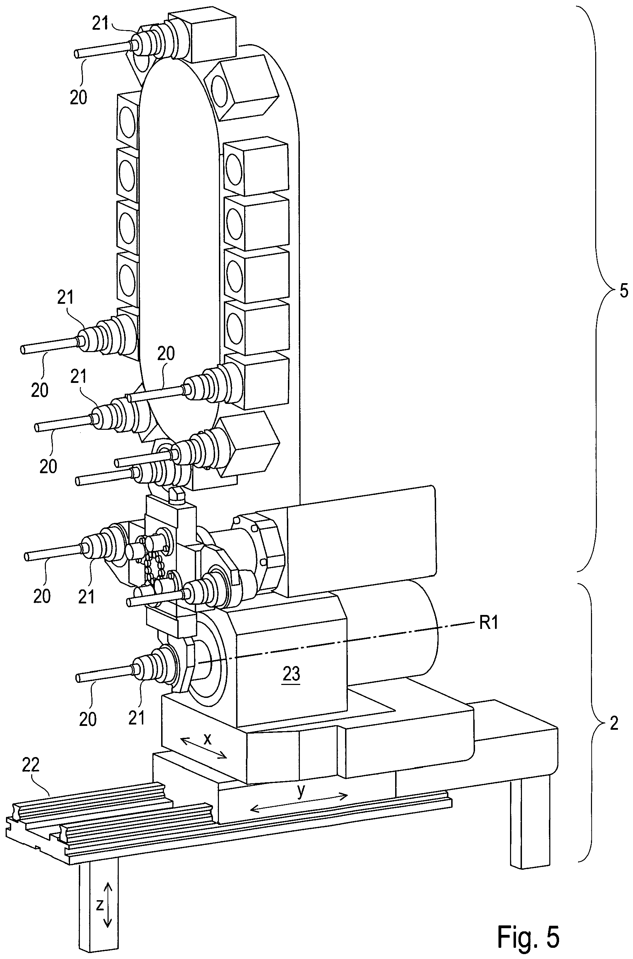

- Figur 5 -: eine Bearbeitungseinheit mit zugeordneter Werkzeugwechseleinheit aus Figur 1B, in perspektivischer Prinzipansicht.

### Ausführunqsbeispiel

Anhand der beiliegenden Zeichnungen erfolgt nachstehend die detaillierte Beschreibung eines Ausführungsbeispiels des erfindungsgemässen Maschinenkonzepts zur Massenherstellung von hochpräzisen Werkstücken, nämlich für Industriezweige mit hohen Garantiebedingungen für die erzeugten Teile.

Für die gesamte weitere Beschreibung gilt als Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen verwiesen.

### Figuren 1A und 1B

Für eine erste, noch relativ geringe Stückzahl an zu produzierenden Werkstücken **8,** z.B. ein Bauteil für die Benzinpumpe eines Automobils mit der Zielgrösse von 200'000 Stück/Jahr, umfasst das Maschinenkonzept ein einziges Bearbeitungszentrum **1,** welches auf einem Maschinensockel **16** ruht und das von einer Schutzverkleidung **10** umgeben ist, die für einen Bediener **9** zur Einsicht in das Innere des Bearbeitungszentrums **1** Sichtfenster **11** aufweist. Beigestellt ist eine Steuerungsanlage **12.** Durch einen nur zeichnerisch vorhandenen Freischnitt in der Schutzverkleidung **10** werden im Bearbeitungszentrum **1** der Bearbeitungsbereich **13** sowie der optional vorhandene Werkzeugwechselbereich **14** mit der Werkzeugwechseleinheit **5** sichtbar.

### Figuren 2A bis 2E und 3A bis 3C

Das hier illustrierte eine Bearbeitungszentrum **1** ist z.B. für eine Zielgrösse von zu produzierenden Werkstücken mit 200'000 Stück/Jahr ausgelegt. Es umfasst drei sternförmig, jeweils um 90° versetzte, zueinander angeordnete Bearbeitungseinheiten **2** mit den in Werkzeughaltern **21** eingespannten Werkzeugen **20,** die zentrisch auf den Bearbeitungsbereich **13** gerichtet sind. Typische permanent eingesetzte oder mittels der Werkzeugwechseleinheit **5** den Bearbeitungseinheiten **2** zugeführte Werkzeuge **20,** dienen Fräs-, Schleif-, Dreh- oder Bohrprozessen oder zum Gewindeschneiden. An vierter Position besitzt das Bearbeitungszentrum **1** einen Be- und Entladebereich **3,** in welchem das Werkstück **8,** je nach momentanem Arbeitsschritt, als Rohling dem Bearbeitungsbereich **13** zugeführt, während der Bearbeitung im Bearbeitungsbereich **13** eingespannt ist oder nach erfolgter Bearbeitung sich zum Abtransport befindet.

Die einzelne Bearbeitungseinheit **2** ruht auf einem jeweiligen Achssystem **22,** welches die Bewegung des von der Bearbeitungseinheit **2** geführten Werkzeugs **20** im x-y-z-Koordinatensystem erlaubt. Bei Aktivierung der Bearbeitungsspindel **23** dreht sich diese um die erste Rotationsachse **R1,** wodurch das von der Bearbeitungsspindel **23** angetriebene Werkzeug **20** in Drehung versetzt wird. Die vorzugsweise drei Bearbeitungseinheiten **2** können so ausgebildet sein und gesteuert werden, dass eine simultanen Bearbeitung am gleichen Werkstück **8** erfolgt.

Der Be- und Entladebereich **3** besitzt einen Schwenkblock **4** mit einem um die Schwenkachse **S** drehbaren Schwenkkopf **40,** auf dem zwei Spannfutter **41** angeordnet sind, die zur Halterung und zum Transport der Werkstücke **8** dienen. Umfasst das Maschinenkonzept zunächst nur ein Bearbeitungszentrum **1,** so ist eines der Spannfutter **41** vom Be- und Entladebereich **3** in einer ersten Drehstellung des Schwenkkopfes **40** zur Be- bzw. Entladung der Werkstücke **8** bestimmt, während das andere Spannfutter **41** in der ersten Drehstellung die Werkstücke **8** zur Bearbeitung positioniert und in der zweiten Drehstellung des Schwenkkopfes **40** die Funktionen der beiden Spannfutter **41** wechseln.

Durch den Schwenkblock **4** erstreckt sich ferner eine zweite Rotationsachse **R2,** um das jeweils momentan in Achsrichtung stehende Spannfutter **41** mit dem darin eingespannten Werkstück **8** bei Bedarf in Rotation zu versetzen, z.B. für eine Drehbearbeitung, oder in der Drehposition zu verstellen, um eine andere Seite des Werkstücks **8** zu bearbeiten.

Umfasst das Maschinenkonzept aufgrund höherer geforderter Stückzahl an zu produzierenden Werkstücken **8,** jedoch zumindest ein weiteres Bearbeitungszentrum **1** und die am Werkstück **8** auszuführenden Bearbeitungsschritte sind zwischen den mehreren Bearbeitungszentren **1** technologisch aufgeteilt, so sind die Spannfutter **41** der weiteren Bearbeitungszentren **1** zur Halterung von in den jeweiligen Bearbeitungsbereich **13** einzuführenden teil-bearbeiteten Werkstücken **8** bzw. zur Halterung der aus den jeweiligen Bearbeitungsbereichen **13** abzuführenden teil-bearbeiteten Werkstücken **8** bestimmt. Die beiden Spannfutter **41** des letzten in einer Produktionsstrasse stehenden Bearbeitungszentrums **1** sind wechselseitig zur Zuführung der teil-bearbeiteten Werkstücke **8** bzw. zum Abtransport der fertig-bearbeiteten Werkstücken **8** bestimmt.

Es wird vorausgesetzt, dass die Herstellung der Werkstücke **8** im Rahmen des Maschinenkonzepts mit zunächst nur einem Bearbeitungszentrum **1** gemäss zuerkannter Validierung erfolgt und für Maschinenkonzepte mit mehreren Bearbeitungszentren **1** die validierten Produktionsbedingungen fortgelten.

### Figuren 4A bis 4C

Anhand dieser Figurenfolge werden Maschinenkonzepte mit erweiterter Ausstattung und mehreren Bearbeitungszentren **1** erörtert, wobei die zuerkannte Validierung bestehen bleibt.

### Figur 4A

Das hier illustrierte eine Bearbeitungszentrum **1** ist z.B. für eine Zielgrösse von zu produzierenden Werkstücken mit 200'000 Stück/Jahr ausgelegt. Es ist ein Spänebereich **15** zugeordnet, in dem die bei der Bearbeitung der Werkstücke **8** anfallenden Materialspäne, einschliesslich der beigemischten Kühl- und Schmiermittel, gesammelt und durch Separierung zur weiteren Verwendung aufbereitet werden. Ein zum Bearbeitungszentrum **1,** im Be- und Entladebereich **3** positionierter Roboter **7** mit dem Aktionsradius **R** hat die Funktionen, Beladen des drei Bearbeitungseinheiten **2** aufweisenden Bearbeitungszentrums **1** mit Werkstückrohlingen **8** sowie Abtransport fertig-bearbeiteter Werkstücke **8** vom Bearbeitungszentrum **1,** eventuell auch, Ausführung weiterer Bearbeitungs- oder Handhabungsschritte, wie Entgraten, Bürsten oder Palettieren.

### Figur 4B

Dieses Maschinenkonzept könnte z.B. für eine Zielgrösse von zu produzierenden Werkstücken mit 600'000 Stück/Jahr konzipiert sein. Zur Produktionssteigerung sind drei miteinander in Reihe verkettete Bearbeitungszentren **1** mit gesamthaft genutztem Spänebereich **15** und Transporteinrichtung **6** vorgesehen. Für den technologischen Ablauf gibt es folgende Alternativen:
- auf jedem Bearbeitungszentren **1** werden sämtliche Bearbeitungsschritte vom Werkstückrohling **8** bis zum fertig-bearbeiteten Werkstück **8** durchgeführt; oder
- das erste Bearbeitungszentrum **1** ist zur Durchführung einer ersten Sequenz von Bearbeitungsschritten am Werkstück **8** bestimmt, auf dem zweiten Bearbeitungszentrum **1** erfolgt eine zweite Sequenz von Bearbeitungsschritten und auf dem dritten Bearbeitungszentrum **1** werden die restlichen Bearbeitungsschritte am Werkstück **8** durchgeführt.

Die Mischform beider Prinzipien, alle Bearbeitungsschritte auf einem Bearbeitungszentrum **1** und daneben, quasi in zweiter Linie, Aufteilung der Bearbeitungsschritte in zwei Sequenzen auf die beiden übrigen Bearbeitungszentren **1** dürfte nur bei spezieller Konstellation praktiziert werden.

### Figur 4C

Dieses Maschinenkonzept mit vier im Karree aufgestellten Bearbeitungszentren **1** könnte z.B. für eine Zielgrösse von zu produzierenden Werkstücken **8** mit 800'000 Stück/Jahr konzipiert sein. Für alle vier Bearbeitungszentren **1** ist zumindest ein Roboter **7** vorgesehen, je zwei nebeneinanderstehende Bearbeitungszentren **1** sind jeweils mit einem Spänebereich **15** verbunden und alle vier Bearbeitungszentren **1** nutzen eine Transporteinrichtung **6** gemeinsam. Für die Gestaltung des technologischen Ablaufs der Produktion der Werkstücke **8** stehen wiederum die Alternativen, alle Bearbeitungsschritte auf einem Bearbeitungszentrum **1,** Aufteilung in Sequenzen oder Mischformen, zur Verfügung. Der eine Roboter **7** ist vorzugsweise zwischen den vier Bearbeitungszentren **1** verfahrbar. Ist die Zeit zwischen den Arbeitstakten zu kurz, um den Standort des Roboters **7** zu verstellen, wird man den vier Bearbeitungszentren **1** weitere Roboter **7** zuordnen.

Bei noch höherer Zielgrösse an zu produzierenden Werkstücken **8** von z.B. ab 1'000'000 Stück/Jahr wird der Wechsel der Herstellung auf eine Transfermaschine mit den bisher bei den Bearbeitungszentren **1** eingesetzten Bearbeitungseinheiten **2** und Einhaltung aller validierten Produktionsbedingungen betriebswirtschaftlich sinnvoll.

### Figur 5

Zur Ermöglichung, dass an einer Bearbeitungseinheit **2** unterschiedliche Bearbeitungsschritte mit verschiedenen Werkzeugen **20** oder ein rascher Ersatz eines verschlissenen Werkzeugs **20** erfolgen kann, lässt sich der Bearbeitungseinheit **2** eine Werkzeugwechseleinheit **5** zuordnen. Von der Werkzeugwechseleinheit **5** wird auf Steuerbefehl automatisch das zuvor an der Bearbeitungseinheit **2** angedockte Werkzeug **20** entnommen und ein anderes bzw. ein als Ersatz bestimmtes Werkzeug **20** an der Bearbeitungseinheit **2** eingesetzt.

## Patentansprüche

1. Maschinenkonzept zur Massenherstellung von hochpräzisen Werkstücken (**8**) mit perspektivischer Steigerung der in einer definierten Zeiteinheit zu produzierenden Stückzahl an Werkstücken (**8**), **dadurch gekennzeichnet, dass**
a) zur Herstellung einer ersten Zielgrösse der in der definierten Zeiteinheit zu produzierenden Stückzahl an Werkstücken (**8**) gemäss den an den Werkstücken (**8**) auszuführenden Bearbeitungsschritten zumindest ein Bearbeitungszentrum (**1**) vorgesehen ist;
b) das Bearbeitungszentrum (**1**) mit benötigten Bearbeitungseinheiten (**2**) ausgestattet ist, die auf einen gemeinsamen Bearbeitungsbereich (**13**) gerichtet sind;
c) hierbei Auswahl und Anordnung der Bearbeitungseinheiten (**2**) und technologischer Bearbeitungsablauf hinsichtlich der Werkstückcharakteristik optimiert sind;
d) diese Produktionsbedingungen nach einem Audit als validiert fixiert sind; und
e) zur Herstellung einer gegenüber der ersten Zielgrösse erhöhten zweiten Zielgrösse der in der definierten Zeiteinheit zu produzierenden Stückzahl an Werkstücken (**8**):
ea) dem zumindest einen Bearbeitungszentrum (**1**) zumindest ein weiteres Bearbeitungszentrum (**1**) unter Beibehaltung der validierten Produktionsbedingungen hinzugefügt wird; oder
eb) eine Transfermaschine mit den Bearbeitungseinheiten (**2**) unter Beibehaltung der validierten Produktionsbedingungen ausgestattet wird.

2. Maschinenkonzept nach Anspruch 1, **dadurch gekennzeichnet, dass**
a) die Durchführung aller an einem Werkstück (**8**) auszuführenden Bearbeitungsschritte im Bearbeitungsbereich (**13**) eines zunächst einzigen Bearbeitungszentrums (**1**) unter den validierten Produktionsbedingungen erfolgt; oder
b) unter Fortgeltung der validierten Produktionsbedingungen, zur Steigerung der Stückzahl herzustellender Werkstücke (**8**), das Maschinenkonzept mit weiteren Bearbeitungszentren (**1**) ausgebaut wird; wobei:
ba) auf jedem einzelnen Bearbeitungszentrum (**1**) alle am Werkstück (**8**) vorgesehenen Bearbeitungsschritte durchgeführt werden; oder
bb) in einer gebildeten Produktionsstrasse das erste Bearbeitungszentrum (**1**) zur Durchführung einer ersten Sequenz von Bearbeitungsschritten am Werkstück (**8**) und die nächsten Bearbeitungszentren (**1**) zur Durchführung von weiteren Sequenzen von Bearbeitungsschritten am Werkstück (**8**) bestimmt sind.

3. Maschinenkonzept nach zumindest einem der Ansprüche 1 und 2, **dadurch gekennzeichnet, dass**
a) bei Bildung einer Produktionsstrasse mit mehreren Bearbeitungszentren (**1**) eine reihen-, parallel- oder kombiniert-förmige Verkettung arrangiert wird; und
b) den einzelnen Bearbeitungszentren (**1**), jeweiligen Gruppen von Bearbeitungszentren (**1**) oder der Gesamtheit aller Bearbeitungszentren (**1**):
ba) eine jeweilige bzw. eine gesamthaft genutzte Transporteinrichtung (**6**) zugeordnet ist, die der Zufuhr von Werkstückrohlingen (**8**), dem Weitertransport von teil-bearbeiteten Werkstücken (**8**) und Abfuhr der fertig-bearbeiteten Werkstücke (**8**) dient;
bb) ein jeweiliger bzw. ein gesamthaft genutzter Spänebereich (**15**) zugeordnet ist, welcher der Aufbereitung und Abfuhr der anfallenden Materialspäne dient; und
bc) eine individuell oder gesamthaft nutzbare Steuerungsanlage (**12**) zugeordnet sein könnte.

4. Maschinenkonzept nach zumindest einem der Ansprüche 1 bis 3, **dadurch gekennzeichnet, dass** im Bearbeitungsbereich (**13**) mehrere Bearbeitungseinheiten (**2**), vorzugsweise drei Bearbeitungseinheiten (**2**), vorgesehen sind, die zur simultanen Bearbeitung am gleichen Werkstück (**8**) nutzbar sein können.

5. Maschinenkonzept nach zumindest einem der Ansprüche 1 bis 4, **dadurch gekennzeichnet, dass** aufweist:
a) das erste Bearbeitungszentrum (**1**) einen Be- und Entladebereich (**3**) zur Zuführung der Werkstückrohlinge (**8**) in den Bearbeitungsbereich (**13**) bzw. zur Abführung des teil- oder fertig-bearbeiteten Werkstücks (**8**) aufweist; und
b) das zumindest eine nächste Bearbeitungszentrum (**1**) einen Be- und Entladebereich (**3**) zur Zuführung eines auf einem vorangehenden Bearbeitungszentrum (**1**) teil-bearbeiteten Werkstücks (**8**) in den Bearbeitungsbereich (**13**) dieses nächsten Bearbeitungszentrums (**1**) bzw. zur Abführung des teil- oder fertig-bearbeiteten Werkstücks (**8**) aufweist.

6. Maschinenkonzept nach zumindest einem der Ansprüche 1 bis 5, **dadurch gekennzeichnet, dass** die einzelne Bearbeitungseinheit (**2**) mit deren Bearbeitungsspindel (**23**) auf einem jeweiligen Achssystem (**22**) ruht, welches die Bewegung des von der Bearbeitungseinheit (**2**) geführten Werkzeugs (**20**) sowohl um eine erste Rotationsachse (**R1**) als auch im x-y-z-Koordinatensystem erlaubt.

7. Maschinenkonzept nach zumindest einem der Ansprüche 5 und 6, **dadurch gekennzeichnet, dass** der Be- und Entladebereich (**3**) einen Schwenkblock (**4**) mit einem um eine Schwenkachse (**S**) drehbaren Schwenkkopf (**40**) aufweist, der zur Halterung von in den Bearbeitungsbereich (**13**) einzuführenden rohen oder teil-bearbeiteten Werkstücken (**8**) bzw. aus dem Bearbeitungsbereich (**13**) abzuführenden teil- oder fertig-bearbeiteten Werkstücken (**8**) bestimmt ist.

8. Maschinenkonzept nach Anspruch 7, **dadurch gekennzeichnet, dass**
a) der um die Schwenkachse (**S**) drehbare Schwenkkopf (**40**) zumindest zwei Spannfutter (**41**) zur Halterung und zum Transport der Werkstücke (**8**) besitzt; wobei
b) eines der Spannfutter (**41**) in einer ersten Drehstellung des Schwenkkopfes (**40**) zur Be- bzw. Entladung der Werkstücke (**8**) bestimmt ist, während das andere Spannfutter (**41**) in der ersten Drehstellung die Werkstücke (**8**) zur Bearbeitung positioniert und in der zweiten Drehstellung des Schwenckopfes (**40**) die Funktionen der beiden Spannfutter (**41**) wechseln.

9. Maschinenkonzept nach zumindest einem der Ansprüche 7 und 8, **dadurch gekennzeichnet, dass** sich durch den Schwenkblock (**4**) eine zweite Rotationsachse (**R2**) erstreckt, um das jeweils momentan in Achsrichtung stehende Spannfutter (**41**) mit dem darin eingespannten Werkstück (**8**) bei Bedarf in Rotation zu versetzen oder in der Drehposition zu verstellen.

10. Maschinenkonzept nach zumindest einem der Ansprüche 1 bis 9, **dadurch gekennzeichnet, dass** innerhalb des Bearbeitungszentrums (**1**) zumindest einer der Bearbeitungseinheiten (**2**) eine Werkzeugwechseleinheit (**5**) zugeordnet ist.

11. Maschinenkonzept nach zumindest einem der Ansprüche 1 bis 10, **dadurch gekennzeichnet, dass**
a) zumindest eine der Bearbeitungseinheiten (**2**) spanabhebend ausgebildet ist; und
b) eine der Bearbeitungseinheiten (**2**) zum Abgreifen eines Werkstücks (**8**) aus einem Spannfutter (**41**) vorgesehen sein könnte.

12. Maschinenkonzept nach zumindest einem der Ansprüche 1 bis 11, **dadurch gekennzeichnet, dass** die Transfermaschine als Rundtaktmaschine ausgebildet ist, radial um deren zentrisch angeordnetes Drehgestell eine Vielzahl von Bearbeitungseinheiten (**2**) installiert ist.
